# EUROPEAN PATENT SPECIFICATION

(11) **EP 1 196 969 B1**
(45) Date of publication and mention of the grant of the patent: **23.04.2003**
(21) Application number: 00941941.7
(22) Date of filing: 30.06.2000
(51) Int. Cl.: H01S 3/042

(54) **A SOLID-STATE LASER CRYSTAL ASSEMBLY**
LASERKRISTALLVORRICHTUNG
ENSEMBLE CRISTAL LASER SOLIDE

(30) Priority: 02.07.1999 DK 96199
(43) Date of publication of application: 17.04.2002
(73) Proprietor: Asah Medico A/S, 2650 Hvidovre (DK)
(72) Inventor: BALLE-PETERSEN, Olav, DK-3050 Humlebaek (DK); BRUUN-LARSEN, Morten, DK-2610 Rodovre (DK)
(74) Representative: Plougmann & Vingtoft A/S
(86) International application number: DK0000356
(87) International publication number: WO01003257

(56) References cited:
- WO-A-98/10494
- WO-A-99/27621
- DE-A- 4 132 063
- US-A- 5 331 507
- US-A- 5 553 088
- US-A- 5 581 569
- US-A- 5 907 570

## Description

### FIELD OF THE INVENTION

The present invention relates to a solid-state laser crystal assembly facilitating cooling of a solid-state laser crystal during emission of light.

### BACKGROUND OF THE INVENTION

In US 5,553,088 a solid-state laser crystal assembly is disclosed with a solid-state disc laser that is pumped with a pumping light source. The solid-state laser crystal is positioned at a cooling surface of a cooling member for dissipation of heat generated in the solid-state laser crystal. The cooling member forms a carrier for the solid-state laser crystal. The radiated laser beam propagates approximately parallel to the temperature gradient in the laser. Due to heat dissipation into the cooling member, the assembly facilitates pumping of the laser with a high pumping power. Further, since the radiated laser beam propagates approximately parallel to the temperature gradient in the solid body, the beam is exposed to the same temperature gradient in all cross-sectional areas. Thus, the temperature gradient does not lead to an adverse effect on the beam quality at a high pumping power.

In order to obtain an effective thermal coupling of the solid-state laser crystal to the cooling member, the solid-state laser crystal may be provided with a metal layer, preferably of copper, which is connected via a contact layer made of soft metal, preferably of soft solder or indium, with the cooling surface of the cooling member.

Futhermore, other laser crystal assemblies facilitating cooling of a solid state laser crystal during emission of ligth are disclosed in for example WO-A-9810494 and WO-A-9927621.

It is an important disadvantage of the known assembly that the solid-state laser crystal has to be secured to the cooling member, e.g. by gluing, soldering, or cold-welding. All of these attachment methods require that surfaces to be securely attached to each other are high quality surfaces, i.e. clean, plane and highly polished surfaces. Further, the attachment methods stress the attached parts mechanically and soldering also stresses soldered parts thermally.

### SUMMARY OF THE INVENTION

It is an object of the present invention to provide a solid-state laser crystal assembly without the above-mentioned disadvantages.

It is a further object of the present invention to provide a solid-state laser crystal assembly that is easy to disassemble, e.g. for servicing purposes, cheap, and easy to manufacture.

According to a first aspect of the present invention, the above-mentioned objects are fulfilled by a solid-state laser crystal assembly comprising a solid-state laser crystal for emission of a laser beam, a cooling member for dissipation of heat generated by the laser and having a cooling surface, the solid-state laser crystal being positioned adjacent to the cooling surface, and a holder for holding the cooling member and the solid-state laser crystal so that the solid-state laser crystal is in heat dissipating contact with the cooling surface.

According to a second aspect of the present invention, the above-mentioned objects are fulfilled by a method of producing a solid-state laser crystal assembly comprising the steps of positioning a solid-state laser crystal for emission of a laser beam adjacent to a cooling surface of a cooling member for dissipation of heat generated by the laser, and mounting the cooling member and the solid-state laser crystal with a holder so that the solid-state laser crystal is in heat dissipating contact with the cooling surface.

It is an important advantage of the present invention that the solid-state laser crystal is not secured to the cooling member by gluing, soldering, cold-welding, etc. Instead, the solid-state laser crystal is removably positioned at the cooling surface of the cooling member and; during operation of the assembly, is held in this position by the holder. Thus, the requirement of tedious and time consuming working of surfaces of the solid-state laser crystal and the cooling member, respectively, in order to obtain high quality surfaces that may be reliably secured to each other is hereby avoided and thus, manufacture of the solid-state laser crystal assembly is greatly simplified.

Further the assembly may be disassembled, e.g. for exchange of a defect solid-state laser crystal, facilitating service and repair.

The assembly may comprise a thermally conductive compound that is positioned between the solid-state laser crystal and the cooling member for decreasing the thermal resistance between the solid-state laser crystal and the cooling member.

Preferably, the thickness of the layer of thermally conductive compound ranges from 50 µ to 100 µ.

In a preferred embodiment, the solid-state laser crystal may comprise a reflective coating on the surface facing the cooling member.

The holder may comprise an upper member and a base member, the solid-state laser crystal and the cooling member being held between the upper member and the base member.

In order to reduce the thermal resistance between the solid-state laser crystal and ambient, the base member may contain flow channels for a cooling liquid for absorption and removal of heat conducted through the cooling member to the base member.

The thermal resistance may be further reduced by positioning of a heat pump, such as a thermally conductive element, a peltier element, etc, between the cooling member and the base part for increased transportation of heat from the cooling member to the base part.

Preferably, the cooling member is made of thermally conductive material, such as copper, CVD diamond, etc.

To further increase the dissipation of heat generated in the solid-state laser crystal, the solid-state laser crystal assembly may further comprise a first transparent thermally conductive member being positioned between the cooling surface and the solid-state laser crystal. Preferably, the thermally conductive member is made of a material transparent to the laser beam emitted from the solid-state laser crystal. The thermally conductive member may, for example, be made of sapphire. In a preferred embodiment of the invention the thermally conductive member is bonded to the solid-state laser crystal, for example by anodic bonding of the thermally conductive member to the solid-state laser crystal. The thermally conductive compound then being positioned between the cooling member and the first transparent thermally conductive member.

The cooling member may comprise a transparent opening, the transparent opening being adapted to transmit the laser beam emitted from the solid-state laser crystal. In a preferred embodiment the transparent opening is a boring through the cooling member. Hereby, the heat generated in the solid-state laser crystal may be dissipated through the first transparent thermally conductive member to the cooling surface surrounding the boring through the cooling member.

The solid-state laser crystal may thus be adapted to emit the laser beam through the transparent opening, facilitating mounting of the solid-state laser crystal anywhere in the laser cavity and thus not necessarily as an active end mirror.

To still further increase the dissipation of heat generated in the solid-state laser crystal, the solid-state laser crystal assembly may further comprise a second transparent thermally conductive member being positioned on an opposite site of the laser crystal in relation to the first thermally conductive member. Hereby, the heat generated in the solid-state laser crystal may be transmitted in both directions in relation to the longitudinal direction of the solid-state laser crystal. The first and the second transparent thermally conductive members may by connected or in thermally conductive contact at areas of the members extending beyond the solid-state laser crystal

The second transparent thermally conductive member may be bonded to the opposite site of the solid-state laser crystal in relation to the first thermally conductive member, for example by anodic bonding.

Pumping light may enter the solid-state laser crystal at any angle in relation to its surfaces. In the preferred embodiment, the solid-state laser crystal is a disc laser having the shape of a thin circular plate with an upper surface and a lower surface. When the solid-state laser crystal is positioned in the assembly, the lower surface faces the cooling member and the output laser beam is emitted from the upper surface along a propagation axis that is substantially perpendicular to the upper surface. Preferably, pumping light is emitted towards the upper surface of the solid-state laser crystal at an obtuse angle in relation to the upper surface.

### BRIEF DESCRIPTION OF THE DRAWINGS

Fig. 1 shows a cut-away cross-sectional view of a solid-state laser crystal assembly according to the present invention,
Fig. 2 shows a solid-state laser crystal assembly according to the present invention, and
Fig. 3 shows a solid-state laser crystal assembly comprising a transparent thermally conductive member.

### DESCRIPTION OF A PREFERRED EMBODIMENT

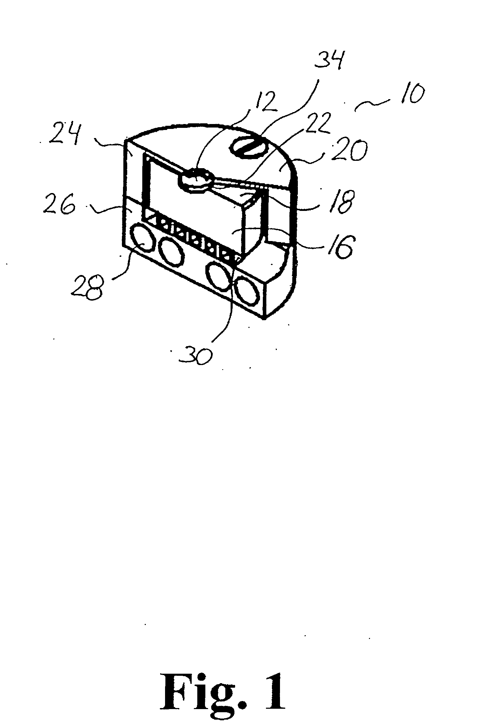

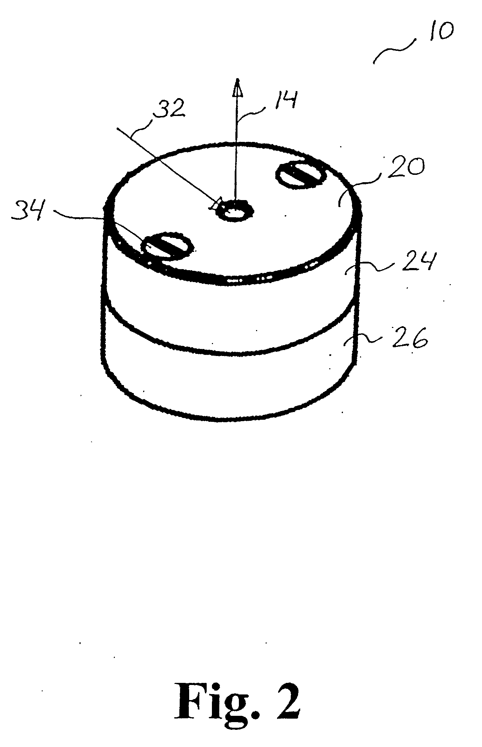

Figs. 1 and 2 show in perspective a solid-state laser crystal assembly 10 according to the present invention. The solid-state laser crystal assembly 10 comprises a solid-state laser crystal 12 for emission of a laser beam 14, and a cooling member 16 for dissipation of heat generated by the solid-state laser crystal12 and having a cooling surface 18. The solid-state laser crystal 12 is positioned adjacent to the cooling surface 18. The assembly 10 also has a holder 20 for holding the cooling member 16 and the solid-state laser crystal 12 so that the solid-state laser crystal 12 is in heat dissipating contact with the cooling surface 18.

A thermally conductive compound 22 is positioned between the solid-state laser crystal 12 and the cooling member 16 for decreasing the thermal resistance between the solid-state laser crystal 12 and the cooling member 16. Preferably, the thickness of the layer of thermally conductive compound ranges from 50 µ to 100 µ.

The holder 20 may comprise an upper member 24 and a base member 26, the solid-state laser crystal 12 and the cooling member 16 being held between the upper member 24 and the base member 26 that are kept together by fastening means, such as screws 34.

In order to reduce the thermal resistance between the solid-state laser crystal 12 and ambient, the base member 26 may contain flow channels 28 for a cooling liquid for absorption and removal of heat conducted through the cooling member 16 to the base member 26.

The thermal resistance may be further reduced by positioning of a heat pump 30, such as a thermally conductive element, a peltier element, etc, between the cooling member 16 and the base part 26 for increased transportation of heat from the cooling member 16 to the base part 26.

Pumping light 32 is emitted towards the upper surface of the solid-state laser crystal 12 at an obtuse angle in relation to the upper surface.

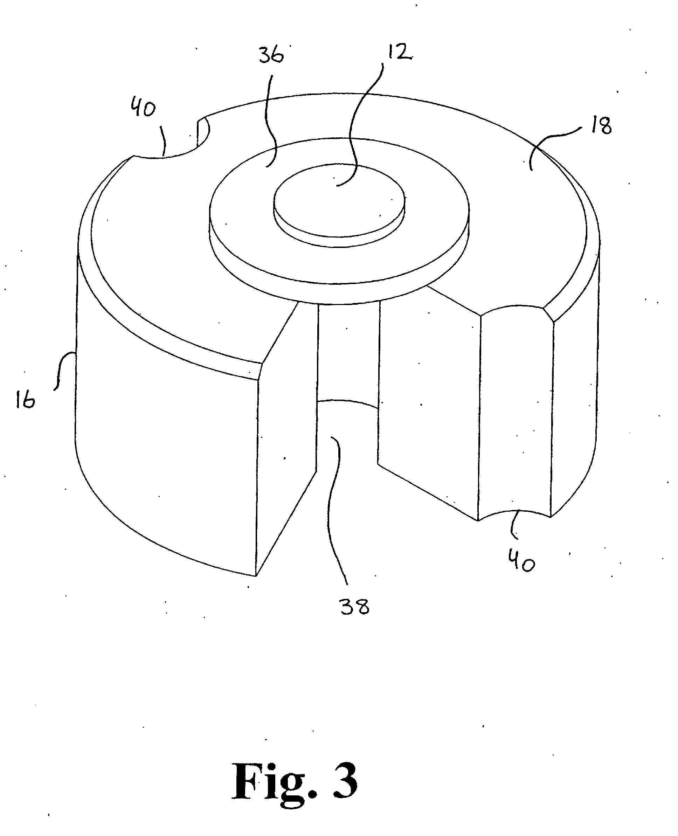

Fig. 3 shows a solid-state laser assembly according to an embodiment of the invention. A first transparent thermally conductive member 36 is positioned adjacent the cooling surface 18 of the cooling member 16, and the solid-state laser crystal is then positioned adjacent to the first transparent thermally conductive member 36, on an opposite side. The first transparent thermally conductive member is made of sapphire, but also any other thermally conductive material transparent for the laser beam emitted by the solid-state laser crystal 12 may be used. The first transparent thermally conductive member 36 is bonded to the solid-state laser crystal 12 by anodic bonding so that an optically clean . connection is obtained.

The indentations 40 are adapted to receive at least part of the screws 34 (shown in Fig. 2).

A second transparent thermally conductive member (not shown) may be positioned adjacent to the solid-state laser crystal 12 on the side of the solid-state laser crystal opposite the first transparent thermally conductive member so that heat generated by the solid-state laser crystal may be dissipated in the transparent thermally conductive members and thus conducted away from the solid-state laser crystal in both lengthways directions of the laser rod. The solid-state laser crystal is thus positioned in-between two transparent thermally conductive members in a sandwich-like structure. The second transparent thermally conductive member may be bonded to the solid-state laser crystal.

The cooling member 16 has a boring 38, so that a laser beam (not shown) emitted from the solid-state laser 12 may be transmitted through the first transparent thermally conductive member and through the boring 38 of the cooling member 16. Hereby, the laser crystal may be positioned anywhere in a laser cavity (not shown) facilitating emission of light from/incident light at both ends of the laser rod.

When the cooling member has a boring, the effective cooling area of a solid-state laser crystal 12 positioned adjacent the cooling surface 18 is reduced by the sectional area of the boring. To compensate for the reduced cooling area, the transparent thermally conductive member is positioned so that at least a part of the transparent thermally conductive member is positioned adjacent to the cooling surface 18. The heat is thus dissipated in the transparent thermally conductive member and lead to the cooling member 18. The heat transport in the transparent thermally conductive member is then horizontal but this has only a limited effect on the vertical heat dissipation in the solid-state laser crystal so that no 'thermal lens' effect is seen in the solid-state laser crystal.

The first transparent thermally conductive member 36 is in Fig. 3 shown having a circular disc form, but it is envisaged that the first and second transparent thermally conductive members may obtain any form suitable for being thermally connected to the solid-state laser crystal for cooling the laser crystal.

## Claims

1. A solid-state laser crystal (12) assembly comprising
a solid-state laser crystal (12) for emission of a laser beam,
a cooling member (16) for dissipation of heat generated by the laser and having a cooling surface (18), the solid-state laser crystal being positioned adjacent to the cooling surface in such a way that the direction of emission of the laser beam (14) is substantially normal to the cooling surface, and in such a way that heat generated in the solid-state laser crystal is transported along the longitudinal direction of the laser crystal, and
a holder (20) for holding the cooling member and the solid-state laser crystal so that the solid-state laser crystal is in heat dissipating contact with the cooling surface.

2. A solid-state laser crystal assembly according to claim 1, wherein the holder further comprises an upper member (24) and a base member (26), the solid-state laser crystal and the cooling member being held between the upper member and the base member.

3. A solid-state laser crystal assembly according to claim 2, wherein the base member contains flow channels (28) for a cooling liquid.

4. A solid-state laser crystal assembly according to claims 2 or 3, further comprising a heat pump (30) positioned between the cooling member and the base part for increased transportation of heat from the cooling member to the base part.

5. A solid-state laser crystal assembly according to claim 4, wherein the heat pump is a thermally conductive element.

6. A solid-state laser crystal assembly according to claim 5, wherein the heat pump is a peltier element.

7. A solid-state laser crystal assembly according to any of the preceding claims, further comprising a thermally conductive compound positioned between the solid-state laser crystal and the cooling member.

8. A solid-state laser crystal assembly according to any of the preceding claims, wherein the cooling member is made of copper.

9. A solid-state laser crystal assembly according to any of the preceding claims, wherein the solid-state laser crystal assembly further comprises a first transparent thermally conductive member (36), the first transparent thermally conductive member being positioned between the cooling surface and the solid-state laser crystal.

10. A solid-state laser crystal assembly according to claim 9, wherein the first transparent thermally conductive member is bonded to the solid-state laser crystal.

11. A solid-state laser crystal assembly according to claims 9 or 10, wherein the cooling member comprises a transparent opening (38), the transparent opening being adapted to transmit the laser beam emitted from the solid-state laser crystal.

12. A solid-state laser crystal assembly according to claim 11, wherein the solid-state laser crystal is adapted to emit the laser beam through the transparent opening.

13. A solid-state laser crystal assembly according to any of claims 9-12, further comprising a second transparent thermally conductive member being positioned on an opposite site of the solid-state laser crystal in relation to the first thermally conductive member.

14. A solid-state laser crystal assembly according to claim 13, wherein the second transparent thermally conductive member is bonded to the solid-state laser crystal.

15. A method of producing a solid-state laser crystal assembly comprising the steps of:
positioning a solid-state laser crystal (12) for emission of a laser beam adjacent to a cooling surface (18) of a cooling member (16) for dissipation of heat generated by the laser in such a way that the laser beam will be emitted in a direction which is substantially normal to the cooling surface, and in such a way that heat generated in the solid-state laser crystal is transported along the longitudinal direction of the laser crystal, and
holding the cooling member and the solid-state laser crystal with a holder (20) so that the solid-state laser crystal is in heat dissipating contact with the cooling surface.

16. A method according to claim 15, further comprising the steps of
providing a holder with an upper member (24) and a base member (26), and
positioning the solid-state laser crystal (12) and the cooling member (16) between the upper member (24) and the base member (26).

17. A method according to claim 16, further comprising the step of providing the base member with flow channels (28) for a cooling liquid.

18. A method according to claims 16 or 17, further comprising the step of positioning a heat pump (30) between the cooling member and the base part for increased transportation heat from the cooling member to the base part.

19. A method according to claim 18, wherein the heat pump is a thermally conductive element.

20. A method according to claim 19, wherein the heat pump is a peltier element.

21. A method according to any of claims 15-20, further comprising the step of positioning a thermally conductive compound between the solid-state laser crystal and the cooling member.

22. A method according to any of claims 15-21, further comprising the step of providing a cooling member made out of copper.

23. A method according to any of claims 15-22, further comprising the step of positioning a first transparent thermally conductive member (36) between the cooling surface and the solid-state laser crystal.

24. A method according to claim 23, further comprising the step of bonding the first transparent thermally conductive member to the solid-state laser crystal.

25. A method according to claims 23 or 24, further comprising the step of providing a transparent opening (38) in the cooling member, the transparent opening being adapted to transmit the laser beam emitted from the solid-state laser crystal.

26. A method according to claim 25, wherein the solid-state laser crystal is adapted to emit the laser beam through the transparent opening (38).

27. A method according to any of claims 23-26, further comprising the step of positioning a second transparent thermally conductive member on an opposite site of the solid-state laser crystal in relation to the first thermally conductive member.

28. A method according to claim 27, further comprising the step of bonding the second transparent thermally conductive member to the solid-state laser crystal.

## Patentansprüche

1. Festkörperlaserkristall- (12) Anordnung, die aufweist:
einen Festkörperlaserkristall (12) zur Emission eines Laserstrahls,
ein Kühlglied (16) zur Ableitung von Wärme, die durch den Laser erzeugt wird, das eine Kühlfläche (18) aufweist, wobei der Festkörperlaserkristall in einer solchen Weise benachbart zur Kühlfläche angeordnet ist, daß die Richtung der Emission des Lasers (14) im wesentlichen normal zur Kühlfläche ist, und in einer solchen Weise, daß im Festkörperlaserkristall erzeugte Wärme längs der Längsrichtung des Laserkristalls transportiert wird, und
einen Halter (20), der das Kühlglied und den Festkörperlaserkristall so hält, daß sich der Festkörperlaserkristall in einem wärmeableitenden Kontakt mit der Kühlfläche befindet.

2. Festkörperlaserkristall-Anordnung nach Anspruch 1, wobei der Halter ferner ein oberes Glied (24) und ein Basisglied (26) aufweist, wobei der Festkörperlaserkristall und das Kühlglied zwischen dem oberen Glied und dem Basisglied gehalten werden.

3. Festkörperlaserkristall-Anordnung nach Anspruch 2, wobei das Basisglied Fließkanäle (28) für eine Kühlflüssigkeit enthält.

4. Festkörperlaserkristall-Anordnung nach den Ansprüchen 2 oder 3, die ferner eine Wärmepumpe (30) aufweist, die für einen erhöhten Transport von Wärme vom Kühlglied zum Basisteil zwischen dem Kühlglied und dem Basisteil angeordnet ist.

5. Festkörperlaserkristall-Anordnung nach Anspruch 4, wobei die Wärmepumpe ein wärmeleitendes Element ist.

6. Festkörperlaserkristall-Anordnung nach Anspruch 5, wobei die Wärmepumpe ein Peltierelement ist.

7. Festkörperlaserkristall-Anordnung nach einem der vorhergehenden Ansprüche, die ferner eine wärmeleitende Zusammensetzung aufweist, die zwischen dem Festkörperlaserkristall und dem Kühlglied angeordnet ist.

8. Festkörperlaserkristall-Anordnung nach einem der vorhergehenden Ansprüche, wobei das Kühlglied aus Kupfer besteht.

9. Festkörperlaserkristall-Anordnung nach einem der vorhergehenden Ansprüche, wobei die Festkörperlaserkristall-Anordnung ferner ein erstes transparentes wärmeleitendes Glied (36) aufweist, wobei das erste transparente wärmeleitende Glied zwischen der Kühlfläche und dem Festkörperlaserkristall angeordnet ist.

10. Festkörperlaserkristall-Anordnung nach Anspruch 9, wobei das erste transparente wärmeleitende Glied an den Festkörperlaserkristall gebunden ist.

11. Festkörperlaserkristall-Anordnung nach den Ansprüchen 9 oder 10, wobei das Kühlglied eine transparente Öffnung (38) aufweist, wobei die transparente Öffnung angepaßt ist, den Laserstrahl durchzulassen, der vom Festkörperlaserkristall emittiert wird.

12. Festkörperlaserkristall-Anordnung nach Anspruch 11, wobei der Festkörperlaserkristall angepaßt ist, den Laserstrahl durch die transparente Öffnung zu emittieren.

13. Festkörperlaserkristall-Anordnung nach einem der Ansprüche 9- 12, die ferner ein zweites transparentes wärmeleitendes Glied aufweist, das in Beziehung zum ersten wärmeleitenden Glied an einer gegenüberliegenden Stelle des Festkörperlaserkristalls angeordnet ist.

14. Festkörperlaserkristall-Anordnung nach Anspruch 13, wobei das zweite transparente wärmeleitende Glied an den Festkörperlaserkristall gebunden ist.

15. Verfahren zur Herstellung einer Festkörperlaserkristall- Anordnung, mit den Schritten:
Anordnen eines Festkörperlaserkristalls (12) zur Emission eines Laserstrahls benachbart zu einer Kühlfläche (18) eines Kühlgliedes (16) zur Ableitung von Wärme, die durch den Laser erzeugt wird, in einer solchen Weise, daß der Laserstrahl in eine Richtung emittiert werden wird, die im wesentlichen normal zur Kühlfläche ist, und in einer solchen Weise, daß im Festkörperlaserkristall erzeugte Wärme längs der Längsrichtung des Laserkristalls transportiert wird, und
Halten des Kühlglieds und des Festkörperlaserkristalls mit einem Halter (20), so daß sich der Festkörperlaserkristall in einem wärmeableitenden Kontakt mit der Kühlfläche befindet.

16. Verfahren nach Anspruch 15, das ferner die Schritte aufweist:
Bereitstellen eines Halters mit einem oberen Glied (24) und einem Basisglied (26), und
Anordnen des Festkörperlaserkristalls (12) und des Kühlgliedes (16) zwischen dem oberen Glied (24) und dem Basisglied (26).

17. Verfahren nach Anspruch 16, das ferner den Schritt aufweist: Versehen des Basisgliedes mit Fließkanälen (28) für eine Kühlflüssigkeit.

18. Verfahren nach den Ansprüchen 16 oder 17, das ferner den Schritt aufweist: Anordnen einer Wärmepumpe (30) zwischen dem Kühlglied und dem Basisteil für einen erhöhten Transport von Wärme von Kühlglied zum Basisteil.

19. Verfahren nach Anspruch 18, wobei die Wärmepumpe ein wärmeleitendes Element ist.

20. Verfahren nach Anspruch 19, wobei die Wärmepumpe ein Peltierelement ist.

21. Verfahren nach einem der Ansprüche 15-20, das ferner den Schritt aufweist: Anordnen einer wärmeleitenden Zusammensetzung zwischen dem Festkörperlaserkristall und dem Kühlglied.

22. Verfahren nach einem der Ansprüche 15-21, das ferner den Schritt aufweist: Bereitstellen eines Kühlgliedes, das aus Kupfer besteht.

23. Verfahren nach einem der Ansprüche 15-22, das ferner den Schritt aufweist: Anordnen eines ersten transparenten wärmeleitenden Gliedes (36) zwischen der Kühlfläche und dem Festkörperlaserkristall.

24. Verfahren nach Anspruch 23, das ferner den Schritt aufweist: festes Verbinden des ersten transparenten wärmeleitenden Gliedes mit dem Festkörperlaserkristall.

25. Verfahren nach den Ansprüchen 23 oder 24, das ferner den Schritt aufweist: Bereitstellen einer transparenten Öffnung (38) im Kühlglied, wobei die transparente Öffnung angepaßt ist, den vom Festkörperlaserkristall emittierten Laserstrahl durchzulassen.

26. Verfahren nach Anspruch 25, wobei der Festkörperlaserkristall angepaßt ist, den Laserstrahl durch die transparente Öffnung (38) zu emittieren.

27. Verfahren nach einem der Ansprüche 23-26, das ferner den Schritt aufweist: Anordnen eines zweiten transparenten wärmeleitenden Gliedes in Beziehung zum ersten wärmeleitenden Glied an einer gegenüberliegenden Stelle des Festkörperlaserkristalls.

28. Verfahren nach Anspruch 27, das ferner den Schritt aufweist: festes Verbinden des zweiten transparenten wärmeleitenden Gliedes mit dem Festkörperlaserkristall.

## Revendications

1. Ensemble (12) de cristal de laser solide comprenant :
un cristal (12) de laser solide pour une émission d'un faisceau laser,
une pièce (16) de refroidissement pour une dissipation de la chaleur produite par le laser et ayant une surface (18) de refroidissement, le cristal de laser solide étant positionné de manière adjacente à la surface de refroidissement de manière que la direction d'émission du faisceau laser (14) soit pratiquement normale à la surface de refroidissement, et de manière que la chaleur produite dans le cristal de laser solide soit transmise le long de la direction longitudinale du cristal de laser, et
un support (20) pour maintenir la pièce de refroidissement et le cristal de laser solide de sorte que le cristal de laser solide soit en contact de dissipation de chaleur avec la surface de refroidissement.

2. Ensemble de cristal de laser solide selon la revendication 1, dans lequel le support comprend en outre une pièce supérieure (24) et une pièce (26) de base, le cristal de laser solide et la pièce de refroidissement étant maintenus entre la pièce supérieure et la pièce de base.

3. Ensemble de cristal de laser solide selon la revendication 2, dans lequel la pièce de base contient des canaux (28) de passage pour un fluide de refroidissement.

4. Ensemble de cristal de laser solide selon les revendications 2 ou 3, comprenant en outre une pompe (30) à chaleur positionnée entre la pièce de refroidissement et la partie de base pour un transport accru de chaleur de la pièce de refroidissement à la partie de base.

5. Ensemble de cristal de laser solide selon la revendication 4, dans lequel la pompe à chaleur est un élément thermiquement conducteur.

6. Ensemble de cristal de laser solide selon la revendication 5, dans lequel la pompe à chaleur est un élément Peltier.

7. Ensemble de cristal de laser solide selon l'une quelconque des revendications précédentes, comprenant en outre un composé thermiquement conducteur positionné entre le cristal de laser solide et la pièce de refroidissement.

8. Ensemble de cristal de laser solide selon l'une quelconque des revendications précédentes, dans lequel la pièce de refroidissement est constituée de cuivre.

9. Ensemble de cristal de laser solide selon l'une quelconque des revendications précédentes, dans lequel l'ensemble de cristal de laser solide comprend en outre une première pièce transparente thermiquement conductrice (36), la première pièce transparente thermiquement conductrice étant positionnée entre la surface de refroidissement et le cristal de laser solide.

10. Ensemble de cristal de laser solide selon la revendication 9, dans lequel la première pièce transparente thermiquement conductrice est fixée par jonction au cristal de laser solide.

11. Ensemble de cristal de laser solide selon la revendication 9 ou 10, dans lequel la pièce de refroidissement comprend une ouverture transparente (38), l'ouverture transparente étant conçue pour transmettre le faisceau laser émis par le cristal de laser solide.

12. Ensemble de cristal de laser solide selon la revendication 11, dans lequel le cristal de laser solide est conçu pour émettre le faisceau laser à travers l'ouverture transparente.

13. Ensemble de cristal de laser solide selon l'une quelconque des revendications 9 à 12, comprenant en outre une deuxième pièce transparente thermiquement conductrice qui est positionnée sur un côté opposé du cristal de laser solide par rapport à la première pièce transparente thermiquement conductrice.

14. Ensemble de cristal de laser solide selon la revendication 13, dans lequel la deuxième pièce transparente thermiquement conductrice est fixée par jonction au cristal de laser solide.

15. Procédé pour fabriquer un ensemble de cristal de laser solide comprenant les étapes consistant à :
positionner un cristal (12) de laser solide pour une émission d'un faisceau laser de manière adjacente à une surface (18) de refroidissement d'une pièce (16) de refroidissement pour une dissipation de la chaleur produite par le laser de manière que le faisceau laser soit émis dans une direction qui est pratiquement normale à la surface de refroidissement, et de manière que la chaleur produite dans le cristal de laser solide soit transmise le long de la direction longitudinale du cristal de laser, et
maintenir la pièce de refroidissement et le cristal de laser solide avec un support (20) de sorte que le cristal de laser solide soit en contact de dissipation de chaleur avec la surface de refroidissement.

16. Procédé selon la revendication 15, comprenant en outre les étapes consistant à :
fournir un support avec une pièce supérieure (24) et une pièce (26) de base, et
positionner le cristal (12) de laser solide et la pièce (16) de refroidissement entre la pièce supérieure (24) et la pièce (26) de base.

17. Procédé selon la revendication 16, comprenant en outre l'étape consistant à munir la pièce de base de canaux (28) de passage pour un fluide de refroidissement.

18. Procédé selon la revendication 16, comprenant en outre l'étape consistant à positionner une pompe (30) à chaleur entre la pièce de refroidissement et la partie de base pour un transfert accru de chaleur de la pièce de refroidissement à la partie de base.

19. Procédé selon la revendication 18, dans lequel la pompe à chaleur est un élément thermiquement conducteur.

20. Procédé selon la revendication 19, dans lequel la pompe à chaleur est un élément Peltier.

21. Procédé selon l'une quelconque des revendications 15 à 20, comprenant en outre l'étape consistant à positionner un composé thermiquement conducteur entre le cristal de laser solide et la pièce de refroidissement.

22. Procédé selon l'une quelconque des revendications 15 à 21, comprenant en outre l'étape consistant à prévoir une pièce de refroidissement constituée de cuivre.

23. Procédé selon l'une quelconque des revendications 15 à 22, comprenant en outre l'étape consistant à positionner une première pièce transparente thermiquement conductrice (36) entre la surface de refroidissement et le cristal de laser solide.

24. Procédé selon la revendication 23, comprenant en outre l'étape consistant à fixer par jonction la première pièce transparente thermiquement conductrice au cristal de laser solide.

25. Procédé selon la revendication 23 ou 24, comprenant en outre l'étape consistant à prévoir une ouverture transparente (38) dans la pièce de refroidissement, l'ouverture transparente étant conçue pour transmettre le faisceau laser émis par le cristal de laser solide.

26. Procédé selon la revendication 25, dans lequel le cristal de laser solide est conçu pour émettre le faisceau laser à travers l'ouverture transparente (38).

27. Procédé selon l'une quelconque des revendications 23 à 26, comprenant en outre l'étape consistant à positionner une deuxième pièce transparente thermiquement conductrice sur un côté opposé du cristal de laser solide par rapport à la première pièce transparente thermiquement conductrice.

28. Procédé selon la revendication 27, comprenant en outre l'étape consistant à fixer par jonction la deuxième pièce transparente thermiquement conductrice au cristal de laser solide.
